# EUROPÄISCHE PATENTSCHRIFT

(11) **EP 1 603 783 B1**
(45) Veröffentlichungstag und Bekanntmachung des Hinweises auf die Patenterteilung: **10.12.2008**
(21) Anmeldenummer: 04718286.0
(22) Anmeldetag: 08.03.2004
(51) Int. Cl.: B60T 11/26, B60T 17/06

(54) **BEH LTER ZUR DRUCKMITTELSPEISUNG**
CONTAINER FOR HYDRAULIC MEDIUM SUPPLY
RECIPIENT D'ALIMENTATION EN AGENT DE PRESSION

(30) Priorität: 08.03.2003 DE 10310170
(43) Veröffentlichungstag der Anmeldung: 14.12.2005
(73) Patentinhaber: Continental Teves AG & Co. oHG, 60488 Frankfurt am Main (DE); Wiesauplast Kunststoff und Formenbau GmbH & Co. KG, 95676 Wiesau (DE)
(72) Erfinder: VON HAYN, Holger, 61118 Bad Vilbel (DE); TANDLER, Peter, 61479 Kronberg/Ts. (DE); KREBS, Werner, 65582 Hambach (DE); SCHLICHT, Stephan, 65719 Hofheim (DE); NEUMANN, Wolfgang, 95676 Wiesau (DE)
(86) Internationale Anmeldenummer: PCT/EP2004/002355
(87) Internationale Veröffentlichungsnummer: WO 2004/078545

(56) Entgegenhaltungen:
- DE-A- 19 738 334
- DE-C- 4 312 063
- FR-A- 2 039 474
- GB-A- 1 316 937
- US-A- 4 458 118

## Beschreibung

Behälter zur Druckmittelspeisung eines Hauptzylinders einer hydraulischen Kraftfahrzeugbremsanlage, welcher ein auf einem ersten Niveau angeordnetes Füllreservoir mit einer Füllöffnung sowie einer Abgabeöffnung, ein auf einem zweiten Niveau angeordnetes Hauptreservoir mit einer Eingangsöffnung und Abgabeöffnungen, sowie eine Vorrichtung zum Überwachen des Behälterfüllstandes umfasst, wobei sich das erste Niveau oberhalb des zweiten Niveaus befindet und das Füllreservoir und das Hauptreservoir miteinander verbunden sind.

Das Dokument GB1316937 offenbar einen derartigen Behälter, und es ist als nächstliegende Stand der Technik angesehen.

Ein derartiger Behälter ist aus der EP 1 019 272 Bl bekannt. Die Anordnung ist insbesondere in Hinblick auf deren Montierbarkeit beim Fahrzeughersteller verbesserungsfähig.

Es ist daher Aufgabe der vorliegenden Erfindung, einen verbesserten Behälter zur Druckmittelspeisung bereitzustellen.

Diese Aufgabe wird erfindungsgemäß dadurch gelöst, dass ein Mittel zum Befüllen des Hauptreservoirs in den Behälter integriert ist und dieses einen oder mehrere Kanäle aufweist, wodurch der Luftaustausch zwischen den Reservoiren verbessert wird. der Behälter der Erfindung ist einstückig ausgebildet. Dadurch wird eine Verbesserung der Montage beim Fahrzeughersteller erreicht.

Um das Druckmittel des Hauptreservoirs bei Extremlagen des Kraftfahrzeuges, welche beispielsweise bei starken Bremsvorgängen vorkommen, von dem Füllreservoir abzutrennen und somit eine Druckmittelversorgung der Kraftfahrzeugbremsanlage zu gewährleisten und auch ein Herausdringen des Druckmittels über einen Behälterdeckel, der die Füllöffnung verschließt, zu verhindern, weisen die Kanäle eine untere Wand auf.

Die Erstbefüllung der Bremsanlage mit Druckmittel wird maschinell bei dem Fahrzeughersteller vorgenommen. Hierzu wird auf den Behälter ein Befüllstutzen angebracht und die Bremsanlage nach Evakuierung mit Druckmittel befüllt. Mit einem Vorsprung, der an den Behälter angeformt ist, wird der Behälter auf dem Hauptzylinder abgestützt, um die bei der Erstbefüllung auftretenden Kräfte, welche durch das Anbringen des Füllstutzens und den anschließenden Bearbeitungsvorgang entstehen, abfangen zu können.

Gemäß einer vorteilhaften Ausführungsform der Erfindung sind an den Behälter ein Druckmittelzulauf sowie ein Druckmittelrücklauf für Komponenten einer elektrohydraulischen Bremsanlage (EHB) angeformt. Bei einer elektrohydraulischen Bremsanlage (EHB) handelt es sich um ein elektronisch geregeltes System, dessen Funktion und Komponenten allgemein bekannt sind.

Das Hauptreservoir ist in mehrere Kammern unterteilt, die über Öffnungen mit einander verbunden sind. Die zwei Kammern, die den Druckräumen des Hauptzylinders zugeordnet sind, sind derart ausgestaltet, dass bei einem Druckmittelverlust einer Kammer in der zweiten Kammer ein festgelegtes Restvolumen vorhanden ist.

Die Erfindung kann grundsätzliche bei allen Bremsanlagen verwendet werden, wobei sie insbesondere für elektrohydraulische Bremsanlagen (EHB) geeignet ist.

Nachstehend wird die Erfindung anhand der Zeichnung erläutert, welche Ausführungsformen für eine elektrohydraulische Bremsanlage aufzeigt. Es zeigt:
Fig. 1 eine erste Ausführungsform eines erfindungsgemäßen Behälters;
Fig. 2 eine rückwärtige Ansicht der Ausführungsform nach Fig.1;
Fig. 3 einen Schnitt der Ausführungsform nach Fig. 1;
Fig. 4 einen weiteren Schnitt der Ausführungsform nach Fig. 1;
Fig. 5 eine zweite Ausführungsform eines erfindungsgemäßen Behälters.

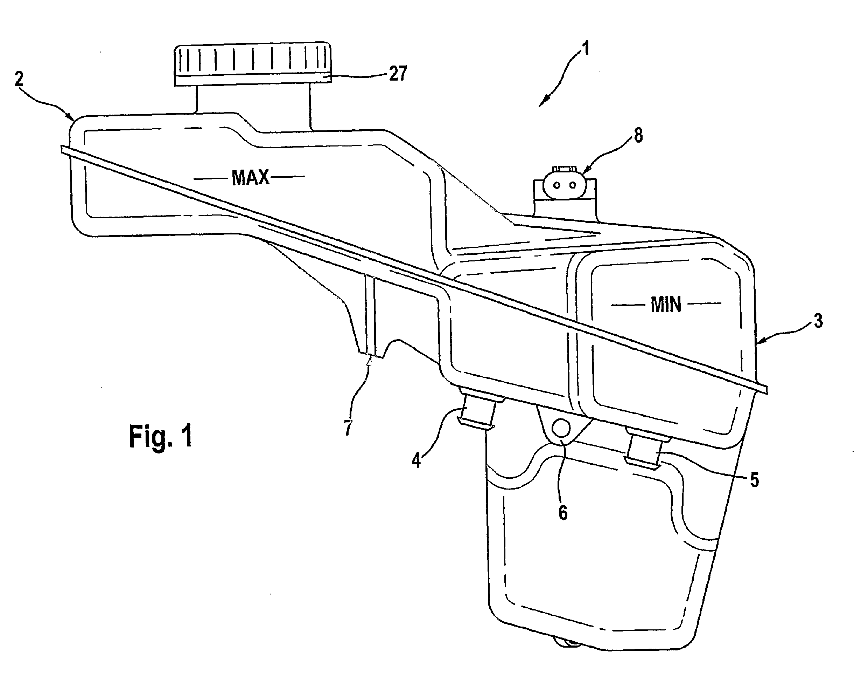

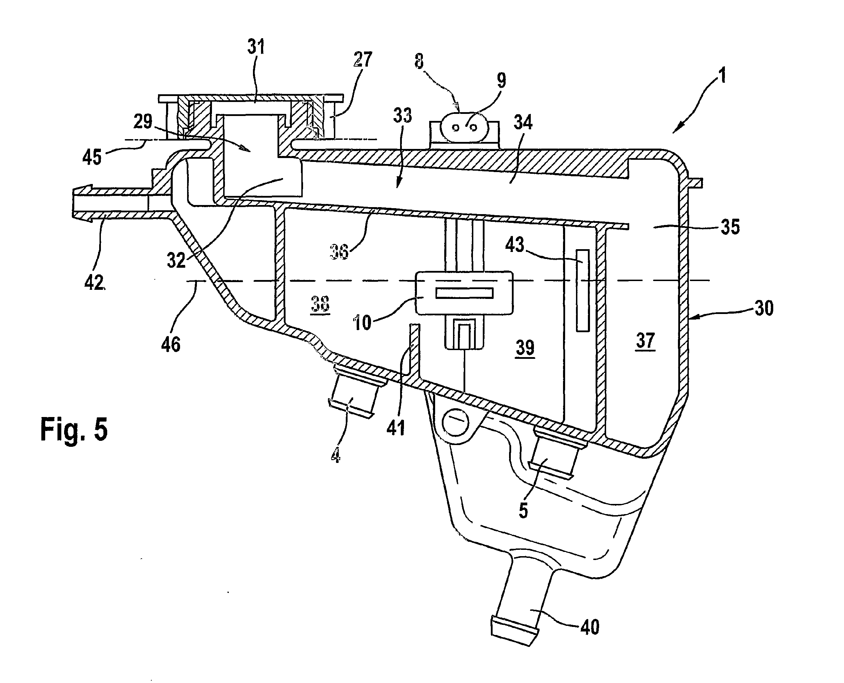

Figur 1 zeigt eine erste Ausführungsform eines erfindungsgemäßen Behälters 1. Dieser umfasst ein Füllreservoir 2 und ein Hauptreservoir 3, welches über zwei Anschlüsse 4,5 zwei Druckmittelräume eines nicht dargestellten Hauptzylinders speist. Der Behälter ist durch die Anschlüsse 4,5 flüssigkeitsdicht mit dem Hauptzylinder verbunden. Außerdem wird der Behälter mit Hilfe eines Befestigungselements über Befestigungsansätze 6 am Hauptzylinder gesichert. Um die bei der Erstbefüllung entstehenden Kräfte besser abfangen zu können, ist an der dem Hauptzylinder zugewandten Seite des Behälters 1 ein Vorsprung 7 vorgesehen, welcher auf dem Gehäuse des Hauptzylinders aufliegt. Eine Vorrichtung 8 zum Überwachen des Behälterflüssigkeitsstandes, deren Einzelteile teilweise in einem zweiten Ausführungsbeispiel gemäß Fig. 5 ersichtlich sind, besteht aus allgemein bekannten Einzelteilen wie einem Kontakt 9 und einem Schwimmer 10. Der Fahrer des Kraftfahrzeuges wird beispielsweise mittels einer Warnlampe gewarnt, wenn der Druckmittelstand in dem Behälter unter ein vorgegebenes Minimum fällt.

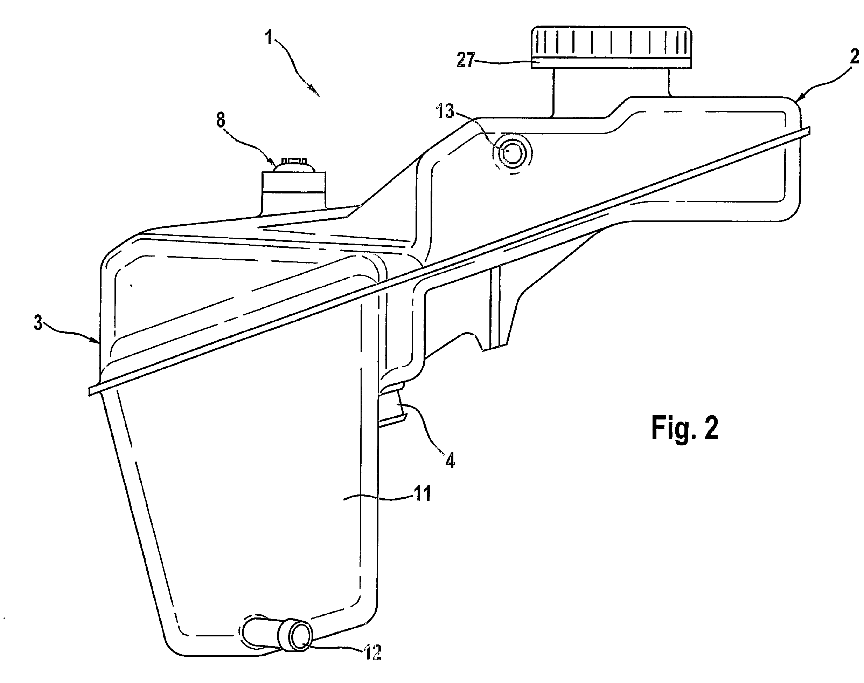

Um Druckmittel dem Hauptzylinder und den Komponenten einer elektrohydraulischen Bremsanlage (EHB) wie beispielsweise einer Pumpe zur Verfügung zu stellen, ist das Hauptreservoir 3 in mehrere Kammern unterteilt. Die Aufteilung der Kammern wird in den Figuren 2, 3 und 4 weiter beschrieben.

Der Behälter 1 wird im Spritzgussverfahren hergestellt. Dabei werden zwei Gehäusehälften gespritzt, die mit Hilfe eines Schweißverfahrens miteinander verbunden werden.

Figur 2 zeigt eine rückwärtige Ansicht der in Fig. 1 beschriebenen Ausführungsform. Um beispielsweise einer Pumpe das notwendige Druckmittel bereitzustellen, erstreckt sich eine Kammer 11 des Hauptreservoirs 3 auf dieser rückwärtigen Seite des Behälters 1 über die Anschlüsse 4,5 hinaus. An die Kammer 11 ist ein Druckmittelzulauf 12 angeformt, der die Pumpe mit Druckmittel speist. Das Füllreservoir 2 weist einen Druckmittelrücklauf 13 auf, über welchen Druckmittel aus der Bremsanlage wieder dem Behälter zugeführt wird.

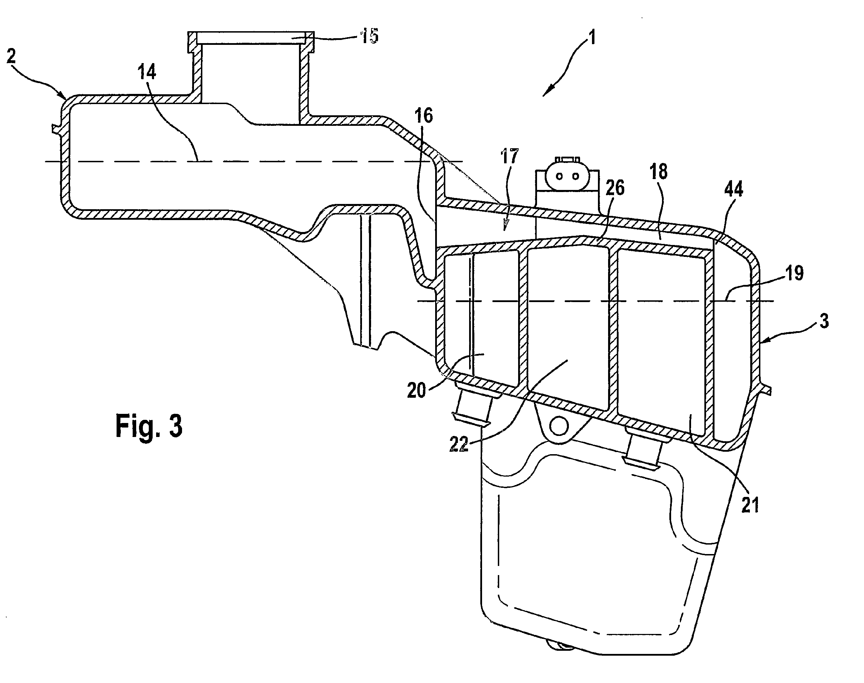

Figur 3 zeigt die in Fig. 1 und 2 beschriebene Ausführungsform des Behälters 1 als Schnitt. Das Füllreservoir 2 ist auf einem ersten Niveau 14 angeordnet und verfügt über eine Füllöffnung 15 und eine Abgabeöffnung 16, an welche sich ein Mittel 17 zum Befüllen des Hauptreservoirs 3 anschließt. Dieses Mittel 17 wird aus zwei parallelen Kanälen 18 gebildet, die das Füllreservoir 2 mit dem Hauptreservoir 3 verbinden und somit das Befüllen des Hauptreservoirs 3 über die Eingangsöffnung 44 ermöglicht.

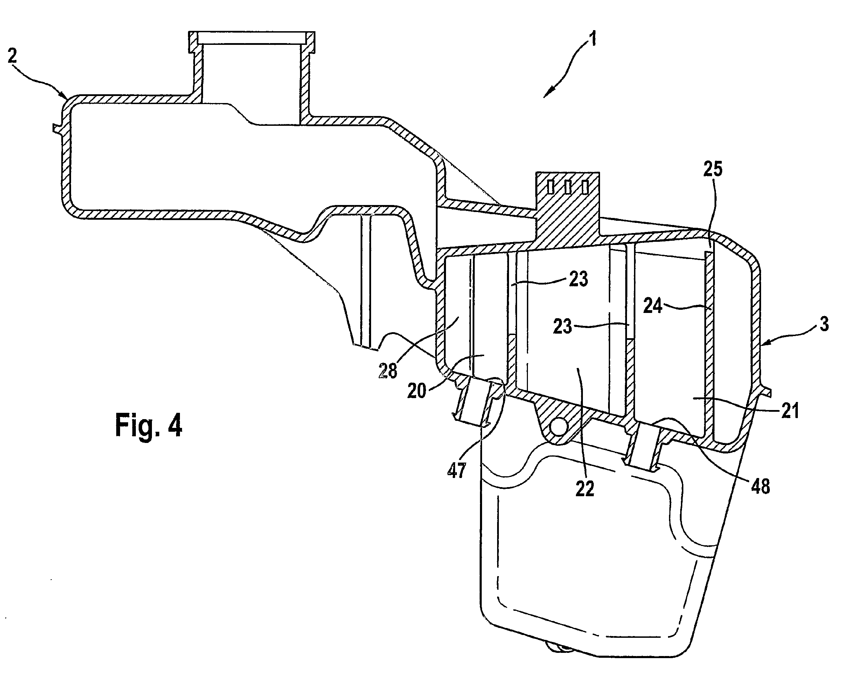

Das Hauptreservoir 3 befindet sich auf einem zweiten Niveau 19, das unterhalb des Niveaus 14 angeordnet ist, wobei sich die Bezeichnung Niveau auf die räumliche Anordnung der Reservoire und nicht auf den Druckmittelstand bezieht. Dadurch kann das Druckmittel vom Füllreservoir 2 über die Kanäle 18 in das Hauptreservoir 3 nachlaufen, welches aus mehreren Kammern besteht. Die beiden Druckkammern des Hauptzylinders werden über eine erste Kammer 20 mit einer Abgabeöffnung 47 und eine zweite Kammer 21 mit einer Abgabeöffnung 48 gespeist. In einer weiteren Kammer 22 sind der Schwimmer 10 und der Kontakt 9 der Vorrichtung 8 zum Überwachen des Behälterfüllstandes angeordnet. Wie aus Fig. 4 ersichtlich ist, sind die Kammern 20,21,22 über Öffnungen 23 miteinander verbunden, um einen Ausgleich des Druckmittels zwischen den Kammern zu gewährleisten und somit einen Druckmittelverlust in einer Kammer über die Vorrichtung 8 anzuzeigen. Die Kammern 11 und 22 sind ebenfalls durch nicht dargestellte Öffnungen miteinander verbunden. Damit ein Luftaustausch zwischen den Kammern 11,20,21,22 des Hauptreservoirs 3 und dem Füllreservoir 2 sichergestellt wird, ist in der Wand 24, welche die Kammern 21 und 11 voneinander trennt, eine Öffnung 25 vorgesehen.

Aus Fig. 3 ist eine untere Wand 26 der Kanäle 18 ersichtlich, die gleichzeitig auch die obere Begrenzung des Hauptreservoirs 3 im Bereich der Kanäle 18 darstellt. Diese trennt bei einer Extremlage des Kraftfahrzeuges, beispielsweise einer starken Abbremsung, das Druckmittel des Hauptreservoirs 3 von dem des Füllreservoirs 2 und der Kanäle 18 ab. Eine einwandfreie Versorgung des Bremskreislaufes mit Druckmittel ist somit auch bei einer solchen Extremlage gewährleistet.

Um ein Herausdringen des Druckmittels über einen Behälterdeckel 27 bei starkem Abbremsen, Beschleunigen oder Kurvenfahren zu verhindern, ist die Füllöffnung 15 mittig auf dem Füllreservoir 2 vorgesehen.

Wie aus Fig. 4 ersichtlich ist, sind in dem Behälter 1 Zwischenwände 28 zur Verstärkung des Behälters 1 angeordnet.

Figur 5 zeigt eine zweite Ausführungsform eines erfindungsgemäßen Behälters 1, welcher ein auf einem Niveau 45 angeordnetes Füllreservoir 29 und ein auf einem Niveau 46 angeordnetes Hauptreservoir 30 umfasst. Das Volumen des Füllreservoirs 29 ist im Vergleich zu dem Volumen des Hauptreservoirs 30 klein ausgebildet. Das Füllreservoir 29 verfügt über eine Füllöffnung 31 und eine Abgabeöffnung 32, an welche sich ein Mittel 33 zum Befüllen des Hauptreservoirs 30 anschließt. Das Druckmittel wird dem Hauptreservoir 30 über das als Kanal 34 ausgebildetes Mittel 33 durch die Eingangsöffnung 35 zugeführt. Eine Wand 36 trennt das Hauptreservoir 30 von dem Kanal 34 ab und separiert bei starker Abbremsung das Druckmittel des Hauptreservoirs 30 von dem Kanal 34 und dem Füllreservoir 29. Somit wird verhindert, dass Druckmittel über den Behälterdeckel 27 in den Motorraum gelangen kann.

Das Hauptreservoir 30 besteht aus drei Kammern 37,38,39. Über die Kammer 37 und einen am unteren Ende angeformten Druckmittelzulauf 40 wird beispielsweise eine Pumpe gespeist. Die Kammern 38 und 39, die durch eine Wand 41 voneinander getrennt werden, speisen über die Anschlüsse 4 und 5 die Druckräume des Hauptzylinders. Der Druckmittelrücklauf 42 ist bei dieser Ausführungsform ebenfalls am Hauptreservoir 30 vorgesehen. Wie bei der Ausführungsform gemäß Fig. 1 beschreiben, sind auch die Kammern 37,38,39 über Öffnungen 43 miteinander verbunden, um ein Ausgleich des Druckmittels zwischen den Kammern 38,39 des Hauptzylinders und der Kammer 37 zu gewährleisten.

### Bezugszeichenliste

- 1: Behälter
- 2: Füllreservoir
- 3: Hauptreservoir
- 4: Anschluss
- 5: Anschluss
- 6: Befestigungsansatz
- 7: Vorsprung
- 8: Vorrichtung
- 9: Kontakt
- 10: Schwimmer
- 11: Kammer
- 12: Druckmittelzulauf
- 13: Druckmittelrücklauf
- 14: Niveau
- 15: Füllöffnung
- 16: Abgabeöffnung
- 17: Mittel
- 18: Kanal
- 19: Niveau
- 20: Kammer
- 21: Kammer
- 22: Kammer
- 23: Öffnung
- 24: Wand
- 25: Öffnung
- 26: Wand
- 27: Behälterdeckel
- 28: Zwischenwand
- 29: Füllreservoir
- 30: Hauptreservoir
- 31: Füllöffnung
- 32: Abgabeöffnung
- 33: Mittel
- 34: Kanal
- 35: Eingangsöffnung
- 36: Wand
- 37: Kammer
- 38: Kammer
- 39: Kammer
- 40: Druckmittelzulauf
- 41: Wand
- 42: Druckmittelrücklauf
- 43: Öffnung
- 44: Eingangsöffnung
- 45: Niveau
- 46: Niveau
- 47: Abgabeöffnung
- 48: Abgabeöffnung

## Patentansprüche

1. Behälter zur Druckmittelspeisung eines Hauptzylinders einer hydraulischen Kraftfahrzeugbremsanlage, welcher ein auf einem ersten Niveau (14) angeordnetes Füllreservoir (2) mit einer Füllöffnung (15) sowie einer Abgabeöffnung (16), ein auf einem zweiten Niveau (19) angeordnetes Hauptreservoir (3) mit einer Eingangsöffnung (44) und Abgabeöffnungen (47,48) sowie einer ersten und einer zweiten Kammer (20,21), welche Druckmittelräume des Hauptzylinders speisen, sowie eine Vorrichtung (8) zum Überwachen des Behälterfüllstandes umfasst, wobei der Behälter (1) einstückig ausgebildet ist und das Füllreservoir (2) und das Hauptreservoir (3) miteinander verbunden sind, wobei ein Mittel (17) zum Befüllen des Hauptreservoirs (3) in den Behälter integriert ist, wobei sich das erste Niveau (14) oberhalb des zweiten Niveaus (19) befindet **dadurch gekennzeichnet, dass** zum Befüllen des Hauptreservoirs (3) zwei parallel nebeneinander angeordnete Kanäle (18) vorgesehen sind, wobei sich eine untere Wand (26) der Kanäle (18) zur Abtrennung des Hauptreservoirs (3) von den Kanälen (18) und dem Füllreservoir (2) bei Extremlagen des Fahrzeuges erstreckt.

2. Behälter nach Anspruch 1, **dadurch gekennzeichnet, dass** der Behälter (1) einen Vorsprung (7) aufweist und der Vorsprung (7) auf dem Hauptzylinder abgestützt ist.

3. Behälter nach Anspruch 2, **dadurch gekennzeichnet, dass** an den Behälter (1) ein Druckmittelzulauf (12) und ein Druckmittelrücklauf (13) für Komponenten einer elektro-hydraulischen Bremsanlage angeformt sind.

4. Behälter nach Anspruch 1, **dadurch gekennzeichnet, dass** das Hauptreservoir (3) in mehrere Kammern (11,20,21,22) unterteilt ist, die über Öffnungen (23) miteinander verbunden sind.

## Claims

1. Container for feeding pressure medium to a master cylinder of a hydraulic motor vehicle brake system, which container comprises a filling reservoir (2) which is arranged at a first level (14) and has a filling opening (15), as well as an outlet opening (16), a main reservoir (3) which is arranged at a second level (19) and has an inlet opening (44) and outlet openings (47, 48), as well as a first and a second chamber (20, 21) which feed pressure medium spaces of the master cylinder, as well as a device (8) for monitoring the filling level of the container, wherein the container (1) is embodied in one piece, and the filling reservoir (2) and the main reservoir (3) are connected to one another, wherein a means (17) for filling the main reservoir (3) is integrated into the container and the first level (14) is located above the second level (19), **characterized in that** in order to fill the main reservoir (3) two ducts (18) which are arranged one next to the other are provided, wherein a lower wall (26) of the ducts (18) extends in order to separate the main reservoir (3) from the ducts (18) and the filling reservoir (2) in extreme positions of the vehicle.

2. Container according to Claim 1, **characterized in that** the container (1) has a projection (7), and the projection (7) is supported on the master cylinder.

3. Container according to Claim 2, **characterized in that** a pressure medium feedline (12) and a pressure medium return line (13) for components of an electro-hydraulic brake system are integrally moulded onto the container (1).

4. Container according to Claim 1, **characterized in that** the main reservoir (3) is divided into a plurality of chambers (11, 20, 21, 22) which are connected to one another via openings (23).

## Revendications

1. Récipient pour l'alimentation en fluide sous pression d'un maître-cylindre d'une installation de freinage hydraulique de véhicule automobile, qui comprend un réservoir de remplissage (2) disposé à un premier niveau (14) avec une ouverture de remplissage (15) ainsi qu'une ouverture de décharge (16), un réservoir principal (3) disposé à un deuxième niveau (19) avec une ouverture d'entrée (44) et des ouvertures de sortie (47, 48) ainsi qu'une première et une deuxième chambres (20, 21), qui alimentent des chambres de fluide sous pression du maître-cylindre, ainsi qu'un dispositif (8) pour surveiller le niveau de remplissage du récipient, dans lequel le récipient (1) est réalisé d'une seule pièce et le réservoir de remplissage (2) et le réservoir principal (3) sont reliés l'un à l'autre, dans lequel un moyen (17) de remplissage du réservoir principal (3) est intégré dans le récipient, dans lequel le premier niveau (14) se trouve au-dessus du deuxième niveau (19), **caractérisé en ce que,** pour le remplissage du réservoir principal (3), il est prévu deux canaux (18) disposés parallèlement l'un à côté de l'autre, dans lequel une paroi inférieure (26) des canaux (18) s'étend de façon à séparer le réservoir principal (3) des canaux (18) et du réservoir de remplissage (2) dans des positions extrêmes du véhicule.

2. Récipient selon la revendication 1, **caractérisé en ce que** le récipient (1) présente une saillie (7) et la saillie (7) est appuyée sur le maître-cylindre.

3. Récipient selon la revendication 2, **caractérisé en ce qu'**un conduit d'arrivée de fluide sous pression (12) et un conduit de retour de fluide sous pression (13) pour des composants d'une installation de freinage électrohydraulique sont formés sur le récipient (1).

4. Récipient selon la revendication 1, **caractérisé en ce que** le réservoir principal (3) est divisé en plusieurs chambres (11, 20, 21, 22), qui sont reliées les unes aux autres par des ouvertures (23).
